**Europäisches Patentamt**

**European Patent Office**

**Office européen des brevets**

(19)

(11) Veröffentlichungsnummer: **0 153 918**
**B1**

(12) # EUROPÄISCHE PATENTSCHRIFT

(45) Veröffentlichungstag der Patentschrift:
16.12.87

(51) Int. Cl.⁴: **G 01 F 23/28, B 22 D 11/16**

(21) Anmeldenummer: **85890031.9**

(22) Anmeldetag: **07.02.85**

(54) Verfahren zum Ermitteln des Füllstandes von Schmelze in einer oszillierenden Kokille einer Stranggiessanlage und Einrichtung zur Durchführung des Verfahrens.

(30) Priorität: **16.02.84 AT 510/84**

(43) Veröffentlichungstag der Anmeldung:
**04.09.85 Patentblatt 85/36**

(45) Bekanntmachung des Hinweises auf die Patenterteilung:
**16.12.87 Patentblatt 87/51**

(84) Benannte Vertragsstaaten:
**BE CH DE FR GB IT LI LU NL SE**

(56) Entgegenhaltungen:
**DE-A-2 305 467**
**DE-B-2 716 271**

(73) Patentinhaber: **VOEST- ALPINE Aktiengesellschaft,
Muldenstrasse 5, A-4020 Linz (AT)**

(72) Erfinder: **Linsmaier, Johann, Siemensstrasse 49,
A-4020 Linz (AT)**
Erfinder: **Grabner, Johann, Julius Wimmer- Strasse
9, A-4020 Linz (AT)**

(74) Vertreter: **Wolfram, Gustav, Dipl.- Ing.,
Schwindgasse 7 P.O. Box 205, A-1041 Wien (AT)**

## Beschreibung

Die Erfindung betrifft ein Verfahren zum Ermitteln des Füllstandes von Schmelze in einer "oszillierenden"(d.h. nich oszillierenden bewegenden) Kokille einer Stranggießanlage, bei dem von einer Quelle, insbesondere einem radioaktiven Strahler ausgehende, den Kokillenhohlraum durchsetzende Signale bzw. Strahlung von einem Empfänger gemessen werden (wird), sowie eine Einrichtung zur Durchführung des Verfahrens.

Um die Gießbedingungen möglichst konstant zu halten und so die Qualität des Stranges zu verbessern, wird bei Stranggießanlagen der Füllstand in der Kokille, d.h. die Höhe des Gießspiegels in der Kokille, möglichst konstant gehalten. Dies geschieht entweder durch Veränderung der Zuflußmenge von Schmelze in die Kokille oder durch Veränderung der Ausziehgeschwindigkeit des aus der Kokille austretenden Stranges oder durch Kombination dieser beiden Methoden.

Ein Problem dabei stellt die Istwert-Erfassung der Füllstandshöhe dar. Dies geschieht oftmals mittels einer radioaktiven Strahlenquelle, wie einem in der Kokillenwand eingebauten Stabstrahler, dessen den Kokillenhohlraum durchsetzende Strahlung von einem Empfänger, wie einem Szintillationszähler, zur weiteren Auswertung aufgenommen wird (DE-B-1 290 303; "Regelungstechnische Praxis und Prozeßrechentechnik", 1972, Heft 3, Seiten 77 bis 86). Die mehr oder minder in den Strahlengang hineinragende Schmelze absorbiert die Strahlung mehr oder weniger, so daß das vom Empfänger gelieferte Signal ein Maß für den Füllstand der Kokille darstellt.

Wenn die Strahlenquelle und der Empfänger in die oszillierende Kokille eingebaut sind - was zweckmäßig ist, um mit geringen Strahlungsintensitäten das Auslangen zu finden -, ergeben sich Probleme durch die Oszillation der Kokille, welche eine Verfälschung des Meßergebnisses infolge der Relativbewegung der Kokille gegenüber dem Badspiegel verursacht. Der Empfänger registriert eine pulsierende Bewegung der Badoberfläche, und es ist erforderlich, die dadurch verursachten Meßfehler zu kompensieren. Gemäß der DE-B-1 290 303 geschieht dies durch Zuschaltung eines Potentiometers mit einer der durch den Oszillationshub bedingten Verfälschung des Meßergebnisses entgegengerichteten Widerstandcharakteristik.

Nachteilig sind hierbei die mechanisch bewegten Teile; es kann bei der Übertragung der Bewegung der Kokille mittels eines Gestänges zu Winkelfehlern kommen, die eine exakte Kompensation der Oszillationsbewegung verhindern. Weiters ist es schwierig und aufwendig, die bewegten feinmechanischen Teile in unmittelbarer Nähe der Kokille so anzuordnen, daß sie dem rauhen Gießbetrieb standhalten.

Eine Verbesserung der aus der DE-B-1 290 303 bekannten Kompensation ist in der DE-A-23 05 467 beschrieben. Die aus dieser DE-A-23 05 467 bekannte Kompensationseinrichtung weist eine Feder mit einem in Reihe dazu liegenden Kraftgeber zwischen einem Aufhängepunkt an der Kokille und einem feststehenden Punkt an einem nicht mitoszillierenden Teil auf, wobei das vom Kraftgeber abgeleitete elektrische Signal dem vom Empfänger abgeleiteten elektrischen Signal überlagert wird. Auch bei dieser Einrichtung ist es in der Praxis schwierig, die Kompensationseinrichtung so anzuordnen, daß sie gegen Staub, Hitze, Spritzwasser und Erschütterungen geschützt ist.

Ein weiterer Nachteil der bekannten Verfahren zum Ermitteln der Füllstandshöhe ist in der statistischen Streuung der Strahlung begründet. Die statistische Streuung, welche bei gleichem Füllstand unterschiedliche Werte für den Füllstand ergibt, macht eine Glättung des empfangenen Signales erforderlich, die zu einer Zeitverzögerung führt ("Regeltechnische Praxis und Prozeßrechentechnik", 1972, Heft 3, Seite 78). Solche Zeitverzögerungen bewirken, daß die Regelung des Füllstandes stets dem aktuellen Füllstand nachhinkt.

Die Erfindung bezweckt die Vermeidung dieser Nachteile und Schwierigkeiten und stellt sich die Aufgabe, ein Verfahren der eingangs beschriebenen Art sowie eine Einrichtung zur Durchführung des Verfahrens zu schaffen, welche eine betriebssichere Kompensation der Oszillation der Kokille ermöglichen. Weiters soll der Einfluß statistischer Streuung minimiert bzw. ausgeschaltet werden, wobei Zeitverzögerungen vermieden werden.

Diese Aufgabe wird erfindungsgemäß dadurch gelöst,
- daß mehrere Messungen jeweils in aufeinanderfolgenden gleich langen Zeitabschnitten, die mit einer Frequenz, die gleich ist oder ein ganzzahliges Vielfaches von der Oszillationsfrequenz der Kokille, beginnen und enden, durchgeführt werden,
- daß die durchgeführten Messungen je Zeitabschnitt gezählt werden,
- daß von den jeweils innerhalb eines Zeitabschnittes gemessenen Werten ein Mittelwert gebildet wird und
- daß der Mittelwert als für den Füllstand repräsentativer Wert herangezogen wird.

Bevorzugt wird die Dauer eines Zeitabschnittes gleich der Dauer einer Oszillationsschwingung der Kokille bemessen.

Eine Einrichtung zur Durchführung des Verfahrens mit einer an einer Kokille angeordneten, Signale aussendenden Quelle und einem dieser gegenüberliegend angeordneten Empfänger ist dadurch gekennzeichnet, daß der Empfänger mit einer Zähleinrichtung und einem Rechner ausgestattet ist, wobei die Zähleinrichtung mittels eines Initiators im Takt der Oszillationsfrequenz bzw. einem ganzzahligen Vielfachen davon ein- und ausschaltbar ist.

Bei Verwendung eines radioaktiven Strahlers als Quelle und eines Szintillationszählers als Empfänger weist zweckmäßig die Zähleinrichtung einen durch den Initiator über eine Flip-Flop-Schaltung ein- und ausschaltbaren Torkreis auf, dem ein Zähler nachgeordnet ist.

Vorteilhaft ist der Initiator von einem an einem oszillierenden Teil der Durchlaufkokille oder des Oszillationsantriebes montierten Schalter, insbesondere einem induktiven Schalter gebildet.

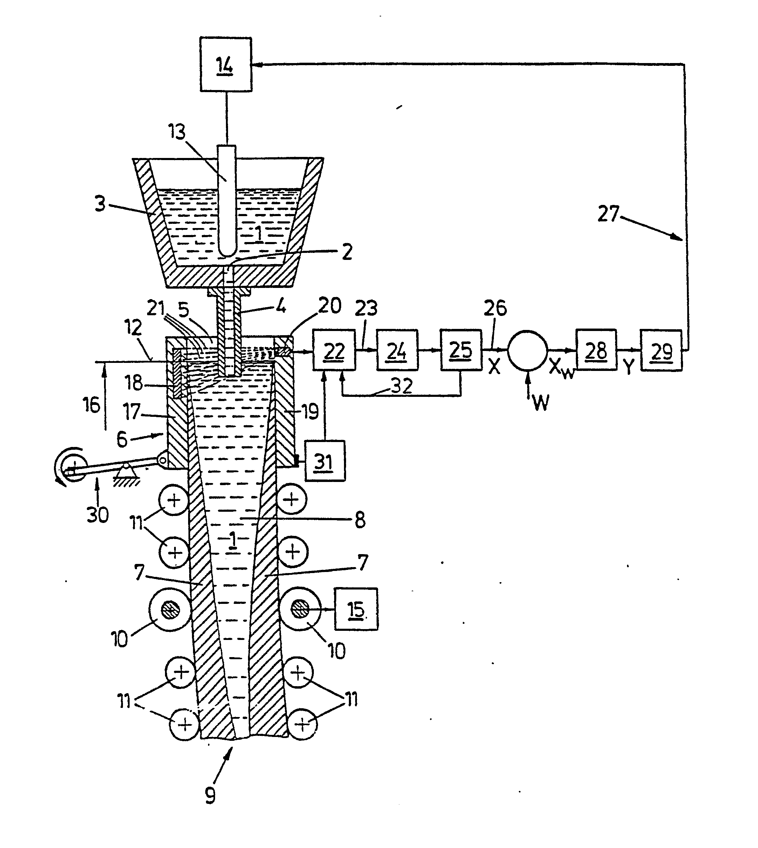

Die Erfindung ist nachfolgend anhand eines in der Zeichnung schematisch dargestellten Ausführungsbeispieles näher erläutert.

Bei der in der Zeichnung dargestellten Stranggießanlage fließt Stahlschmelze 1 aus einer Bodenöffnung 2 eines Zwischengefäßes 3 über ein Gießrohr 4 in einen Kokillenhohlraum 5 einer gekühlten Durchlaufkokille 6, aus der der von der Stahlschmelze gebildete, eine erstarrte Strangschale 7 und einen flüssigen Kern 8 aufweisende Strang 9 mittels Ausziehrollen 10 ausgezogen und mittels Stütz- und Führungsrollen 11 geführt wird. Das Gießrohr 4 taucht in die im Kokillenhohlraum befindliche Stahlschmelze 1 ein. Der Gießspiegel 12 ist üblicherweise von Gießpulver bedeckt.

Die Bodenöffnung 2 des Zwischengefäßes 3 ist mittels eines Stopfens 13, der mittels einer Stelleinrichtung 14 gehoben und gesenkt werden kann, mehr oder weniger verschließbar, wodurch die in den Kokillenhohlraum 5 pro Zeiteinheit zufließende Stahlschmelzenmenge variiert werden kann. Die Ausziehrollen 10 sind mittels eines drehzahlgeregelten Motors 15 angetrieben, so daß die Ausziehgeschwindigkeit des Stranges 9 variiert werden kann.

Zur Ermittlung des Füllstandes, d.h. der Höhe 16 des Gießspiegels 12 im Kokillenhohlraum 5, ist in einer Seitenwand 17 der Kokille 6 ein Stabstrahler 18, vorzugsweise eine Gammastrahlenquelle mit Kobalt 60 als Strahlenquelle eingebaut. In der gegenüberliegenden Wand 19 der Kokille 6 ist ein Empfänger, vorzugsweise ein Szintillationszähler 20 eingebaut.

Die vom Stabstrahler 18 ausgehende, zum Szintillationszähler 20 gerichtete und den Kokillenhohlraum 5 durchsetzende Strahlung ist durch strichlierte Linien 21 veranschaulicht. Je nach Höhe 16 des Gießspiegels 12 wird durch die Stahlschmelze 1 mehr oder weniger zum Szintillationszähler 20 gerichtete Strahlung 21 abgeschirmt, so daß die vom Szintillationszähler 20 empfangene Strahlung ein Maß für den Füllstand, d.h. für die Höhe 16 des Gießspiegels 12 darstellt.

Die vom Szintillationszähler 20 abgegebenen Impulse werden einem Torkreis 22 mit Flip-Flop-Schaltung eingegeben, von dem eine Zählimpulsleitung 23 zu einem Zähler 24 geführt ist, der an einen Rechner 25 angeschlossen ist. Der Ausgang 26 des Rechners 25 wird einem Regelkreis 27 eingegeben, in dem der Ausgangswert X des Rechners 25 mit einem vorwählbaren Soll-Wert W für den Füllstand verglichen wird. Die sich daraus ergebende Abweichung $X_W$ des Füllstandes wird einem PI-Regler 28 zugeführt, dessen Ausgangssignal Y einem Servoverstärker 29 zugeleitet wird. Dieser ist an die Stelleinrichtung 14 für den Stopfen 13 angeschlossen.

An der Kokille 6 bzw. an einem oszillierenden Teil des Oszillationsantriebes 30 ist ein Initiator 31 angeordnet, der einen Start- bzw. Stopimpuls an den Torkreis 22 liefert. Der Initiator 31 ist vorteilhaft als induktiver Schalter ausgebildet. Der Rechner 25 ist zur Torkreissteuerung mit einer Rückkoppelungsleitung 32 mit dem Torkreis 22 verbunden.

Die Funktion der Einrichtung ist folgende:

Der Initiator 31 veranlaßt den Zähler 24 über die Flip-Flop-Schaltung und den Torkreis 22 zur Zählung der vom Szintillationszähler 20 weitergegebenen Signale im Takt der Oszillationsfrequenz. D.h. daß der Initiator 31 Zeitabschnitte bestimmt, innerhalb der der Zähler 24 die eingehenden Signale zählt, wobei die untereinander gleich langen Zeitabschnitte mit einer Frequenz, die gleich ist der Oszillationsfrequenz oder ein ganzzahliges Vielfaches ist der Oszillationsfrequenz der Kokille 6, beginnen und enden. Der Rechner 25 errechnet jeweils einen Mittelwert der innerhalb jedes Zeitabschnittes vom Szintillationszähler gemessenen Signale, indem er die Summe der Werte der Messungen durch die Summe der vom Zähler 24 gezählten Anzahl der Messungen dividiert.

Die vom Rechner 25 ermittelten Werte stellen somit für den Füllstand repräsentative Werte dar, da infolge der Mittelwertbildung über jeweils jeden Zeitabschnitt nicht nur die Verfälschung infolge der Oszillation der Kokille 6 ausgeschaltet, sondern auch der Einfluß der statistischen Streuung der Strahlung auf ein Minimum reduziert wird. Der vom Rechner 25 ermittelte Wert X steht weiters jeweils unmittelbar nach dem Ende jedes Zeitabschnittes zur Verfügung, so daß die Regelung der Füllstandshöhe, die im dargestellten Beispiel durch Variation der Zuflußmenge der Stahlschmelze 1 erzielt wird, unmittelbar nach dem Eingang des letzten Signales des Szintillationszählers 20 des betreffenden Zeitintervalles durchgeführt werden kann.

Anstelle der Variation des Zuflusses kann der vom Rechner 25 ermittelte und den Ist-Wert des Füllstandes repräsentierende Wert X auch zur Variation der Ausziehgeschwindigkeit oder einer Kombination der Variation der Ausziehgeschwindigkeit mit einer Variation der Zuflußmenge herangezogen werden.

Vorzugsweise tritt der Initiator jeweils am unteren oder jeweils am oberen Totpunkt der Oszillationsbewegung der Kokille 6 in Funktion, so daß jeder Zeitabschnitt der Dauer einer Oszillationsschwingung der Kokille 6 gleich ist. Der Zeitabschnitt könnte auch nur einen Teil der Dauer der Oszillationsschwingung oder ein Mehrfaches davon betragen. Wesentlich ist, daß die aufeinanderfolgenden Zeitabschnitte, in denen jeweils Messungen durchgeführt werden, im Takt der Oszillationsfrequenz oder einem ganzzahligen Vielfachen davon beginnen oder enden.

**Patentansprüche**

1. Verfahren zum Ermitteln des Füllstandes von Schmelze (1) in einer sich oszillierend bewegenden Kokille (6) einer Stranggießanlage, bei dem von einer Quelle (18), insbesondere einem radioaktiven Strahler (18) ausgehende, den Kokillenhohlraum (5) durchsetzende Signale bzw. Strahlung von einem Empfänger (20) gemessen werden (wird), dadurch gekennzeichnet,
- daß mehrere Messungen jeweils in aufeinanderfolgenden gleichlangen Zeitabschnitten, die mit einer Frequenz, die gleich ist oder ein ganzzahliges Vielfaches von der Oszillationsfrequenz der Kokille (6), beginnen und enden, durchgeführt werden,
- daß die durchgeführten Messungen je Zeitabschnitt gezählt werden,
- daß von den jeweils innerhalb eines Zeitabschnittes gemessenen Werten ein Mittelwert gebildet wird und
- daß der Mittelwert als für den Füllstand repräsentativer Wert herangezogen wird.

2. Verfahren nach Anspruch 1, dadurch gekennzeichnet, daß die Dauer eines Zeitabschnittes gleich der Dauer einer Oszillationsschwingung der Kokille (6) bemessen wird.

3. Einrichtung zur Durchführung des Verfahrens nach Anspruch 1 oder 2, mit einer an einer Kokille (6) angeordneten, Signale aussendenden Quelle (18) und einem dieser gegenüberliegend angeordneten Empfänger (20), dadurch gekennzeichnet, daß der Empfänger (20) mit einer Zähleinrichtung (24) und einem Rechner (25) ausgestattet ist, wobei die Zähleinrichtung (24) mittels eines Initiators (31) im Takt der Oszillationsfrequenz bzw. einem ganzzahligen Vielfachen davon ein- und ausschaltbar ist.

4. Einrichtung nach Anspruch 3, mit einem radioaktiven Strahler als Quelle (18) und einem Szintillationszähler (20) als Empfänger, dadurch gekennzeichnet, daß die Zähleinrichtung (24) einen durch den Initiator (31) über eine Flip-Flop-Schaltung ein- und ausschaltbaren Torkreis (22) aufweist, dem ein Zähler (24) nachgeordnet ist.

5. Einrichtung nach Anspruch 3 oder 4, dadurch gekennzeichnet, daß der Initiator von einem an einem oszillierenden Teil der Durchlaufkokille (6) oder des Oszillationsantriebes (30) montierten Schalter, insbesondere einem induktiven Schalter gebildet ist.

**Claims**

1. Method of determining the filling state of melt (1) in an oscillatingly moving mould (6) of a continuous casting plant, in which signals or radiation departing from a source (19), in particular a radioactive ray emitter (18), and penetrating the mould cavity (5) are (is) measured by a receiver (20), characterised in
- that a plurality of measurements is taken each in subsequent periods of time of equal lengths, which start and end with a frequency being equal to the oscillation frequency of the mould (6) or to an integral multiple thereof,
- that the measurements carried out are counted per period of time,
- that a mean value is formed from the values measured within each period of time and
- that the mean value is used as the value representative for the filling state.

2. Method according to claim 1, characterised in that the duration of a period of time is dimensioned to equal an oscillation vibration of the mould (6).

3. Apparatus for carrying out the method according to claim 1 or 2, with a signal-emitting source (18) arranged at a mould (6) and a receiver (20) arranged opposite that source, characterised in that the receiver (20) is provided with a counting means (24) and a calculator (25), wherein the counting means (24) is adapted to be switched on or off by means of an initiator (31) at the cycle of the oscillation frequency or an integral multiple thereof.

4. Apparatus according to claim 3, with a radioactive ray emitter as source (18) and a scintillation counter (20) as receiver, characterised in that the counting means (24) comprises a gate circuit (22) adapted to be switched on and off by an initiator (31) via a flip-flop circuit, a counter (24) being arranged to follow upon the gate circuit.

5. Apparatus according to claim 3 or 4, characterised in that the initiator is formed by a switch, in particular an inductive switch, mounted on an oscillating part of the continuous casting mould (6) or of the oscillation drive (30).

**Revendications**

1. Procédé pour déterminer le niveau de remplissage du bain fondu (1) contenu dans une lingotière (6) appartenant à une installation de coulée continue et animée d'un mouvement oscillant, dans lequel des signaux ou un rayonnement émis par une source (18), notamment par un émetteur radioactif (18) et qui traverse(nt) la cavité (5) de la lingotière sont ou est mesuré(s) par un récepteur (20), caractérisé en ce que:
- on exécute plusieurs mesures dans chacune de plusieurs périodes successives de même durée qui commencent et se terminent à une fréquence qui est égale à la fréquence d'oscillation de la lingotière (6) ou qui représente un multiple entier de cette fréquence,

- on compte les mesures exécutées dans chaque période,

- on forme une moyenne à partir des valeurs mesurées dans une période, et

- on utilise la moyenne comme valeur représentative du niveau de remplissage.

2. Procédé selon la revendication 1, caractérisé en ce que la durée d'une période est égale à la durée d'une oscillation de la lingotière (6).

3. Dispositif pour la mise en oeuvre du procédé selon la revendication 1 ou la revendication 2, comportant une source (18) émettant des signaux, montée sur une lingotière (6), et un récepteur (20) disposé en face de cette source, caractérisé en ce que le récepteur (20) est équipé d'un dispositif compteur (24) et d'un calculateur (25), le dispositif compteur (24) pouvant être activé et désactivé au moyen d'un déclencheur (31) au rythme de la fréquence d'oscillation ou d'un multiple entier de cette fréquence.

4. Dispositif selon la revendication 3, comprenant un émetteur radioactif en tant que source (18) et un compteur à scintillations (20) en tant que récepteur, caractérisé en ce que le dispositif compteur (24) présente un circuit porte (22) qui peut être activé et désactivé par le déclencheur (31), par l'intermédiaire d'un circuit basculeur, et en aval duquel est agencé un compteur (24).

5. Dispositif selon la revendication 3 ou la revendication 4, caractérisé en ce que le déclencheur est constitué par un interrupteur, notamment par un interrupteur inductif, monté sur une partie oscillante de la lingotière de coulée continue (6) ou de l'entraînement en oscillation (30).